**Europäisches Patentamt**

(19) **European Patent Office**

**Office européen des brevets**

(11) Numéro de publication: **0 132 173**
**B1**

(12) **FASCICULE DE BREVET EUROPÉEN**

(45) Date de publication du fascicule du brevet:
20.05.87

(51) Int. Cl.⁴: **H 04 M 1/53**

(21) Numéro de dépôt: **84401253.4**

(22) Date de dépôt: **18.06.84**

(54) Circuit d'ouverture de boucle calibrée pour poste téléphonique.

(30) Priorité: **30.06.83 FR 8310916**

(43) Date de publication de la demande:
**23.01.85 Bulletin 85/4**

(45) Mention de la délivrance du brevet:
**20.05.87 Bulletin 87/21**

(84) Etats contractants désignés:
**FR GB IT NL SE**

(56) Documents cité:
**EP-A-0 080 396**

**IBM TECHNICAL DISCLOSURE BULLETIN, vol. 14, no. 8, 8 janvier 1972, page 2507, New York, USA; D. ZORIC: "Telephone line current interruption/flashing"**

(73) Titulaire: **THOMSON- CSF, 173, Boulevard Haussmann, F-75379 Paris Cedex 08 (FR)**

(72) Inventeur: **Dabin, Emmanuel, THOMSON- CSF SCPI 173, bld Haussmann, F-75379 Paris Cedex 08 (FR)**

(74) Mandataire: **Guérin, Michel, THOMSON- CSF SCPI 19, avenue de Messine, F-75008 Paris (FR)**

## Description

La presente invention concerne les postes téléphoniques et plus précisément l'accomplissement de la fonction "rappel d'enregistreur" ou "ouverture de boucle calibrée".

Cette fonction consiste lorsqu'un usager est en conversation sur la ligne téléphonique aboutissant à son poste à lui permettre de provoquer une interruption momentanée du courant sur la ligne pendant une durée bien définie et reconnaissable par le central téléphonique ou le standard privé qui la détecte; ce central ou standard privé en conclut que l'usager veut composer un numero d'appel alors qu'il est en ligne avec quelqu'un; le central se prépare donc à recevoir ce numéro. C'est le cas par exemple lorsque l'usager veut commuter son interlocuteur vers un autre poste relié au même standard. Ce sera le cas dans l'avenir lorsqu'on voudra avoir des conversations entre plusieurs abonnés: un usager en ligne avec un autre en appelle un troisième sans perdre le premier et établit d'abord en appuyant sur un bouton, l'ouverture de boucle calibrée après quoi il compose le numéro d'appel du troisième usager.

Les seules propositions qui ont été faites jusqu'à maintenant pour réaliser cette ouverture de boucle calibrée consistent à prévoir un circuit alimenté par une capacité réservoir qui a été chargée en énergie pendant la phase de conversation avant l'accomplissement de la fonction. Le circuit lui-même est un circuit à constante de temps bien définie qui ne fonctionne que grâce à l'énergie emmagasinée dans la capacité réservoir. Pendant l'ouverture de boucle le courant sur la ligne téléphonique est complètement interrompu comme c'est le cas par exemple lorsque l'on compose un numéro de téléphone sur un téléphone à cadran.

Le document IBM Technical Disclosure Bulletin, Vol 14, n° 8, 1972 page 2507 montre un exemple de circuit d'ouverture de boucle calibrée nécessitant une capacité relativement importante puisqu'elle doit permettre la mise en conduction d'un thyristor.

L'invention consiste d'abord dans la remarque que, bien que cette capacité réservoir ait toujours été proposée sans aucune autre solution de rechange, elle pourrait être évitée et économiser ainsi un composant encombrant et surtout un composant impossible à réaliser sous forme de circuit intégré (cette capacité réservoir a classiquement une valeur de plusieurs microfarads ou plusieurs dizaines de microfarads).

Selon l'invention, on prévoit que la fonction d'ouverture de boucle calibrée réalise une interruption incomplète du courant en provenance de la ligne téléphonique et laisse subsister un courant juste nécessaire au fonctionnement du circuit d'ouverture de boucle calibrée, ce circuit étant réalisé de telle sorte que le courant subsistant n'excède pas quelques

centaines de microampères et corresponde en totalité aux besoins du circuit sans qu'il soit nécessaire de prévoir une capacité réservoir pour fournir tout ou partie de l'énergie nécessaire à son fonctionnement.

Un tel courant est très faible par rapport au courant consommé normalement (en phase de conversation) par le poste téléphonique, et le standard ou le central téléphonique sont parfaitement capables de reconnaître sans problème si le poste est en fonctionnement normal ou en phase d'ouverture de boucle calibrée.

Le poste téléphonique comprendra par conséquent, outre les fonctions téléphoniques proprement dites (et notamment l'émission et la réception de signaux), un circuit d'ouverture de boucle calibrée alimenté par la ligne téléphonique et apte à interrompre l'alimentation des fonctions téléphoniques principales sans interrompre son propre courant d'alimentation et en consommant un courant très faible pendant cette durée.

Le circuit proposé ici, particulièrement simple, comprend un certain nombre de composants qui seront décrits plus précisément ci-dessous, et notamment un transistor qui est susceptible de faire chuter, lorsqu'il est rendu conducteur, la tension d'alimentation des fonctions principales du téléphone en laissant passer un courant très faible destiné à alimenter la fonction d'ouverture de boucle calibrée.

D'autres caractéristiques et avantages de l'invention apparaîtront à la lecture de la description detaillée qui suit et qui est faite en référence aux dessins annexés dans lesquels:

la figure 1 représente un schéma de réalisation de l'invention;

- la figure 2 représente un schéma bloc illustrant mieux les fonctions du circuit selon l'invention.

Le poste téléphonique comprend un certain nombre de fonctions principales (émission et réception de signaux de conversation, numérotation, etc.) qui ont été représentées globalement par un bloc 10 connecté entre deux bornes A et M, M étant une borne de masse par exemple.

Ce bloc 10 est alimenté à partir de la ligne téléphonique non représentée aboutissant aux deux bornes d'entrée B et D du poste.

Un pont redresseur 12, relié aux bornes B et D, fournit, à partir des signaux reçus sur la ligne, une tension redressée qui est appliquée entre un point G et la masse M. Un circuit d'interface haute tension est prevu pour appliquer entre les bornes A et M une fraction seulement de cette tension (environ 5 volts, définis par un stabilisateur de tension à l'intérieur du bloc 10, alors que la tension redressée peut atteindre 50 ou 100 volts entre les points G et M). Ce circuit d'interface haute tension comprend trois transistors Q2, Q3, Q4, une resistance R1 et une capacité de découplage C1. Le transistor Q4, de type NPN, a son collecteur relié à la borne de sortie positive G du pont redresseur et son émetteur relié à la borne A.

Le transistor PNP Q3 a son émetteur relié au collecteur du transistor Q4 et son collecteur relié à la base de ce dernier; le transistor Q2 a son collecteur relié à la base du transistor Q3, son émetteur à la borne A, et sa base à la borne G par l'intermédiaire de la résistance R1 en parallèle sur la capacité de découplage C1.

La fonction d'ouverture de boucle calibrée est normalement alimentée entre les bornes A et M en dehors des instants d'ouverture de boucle. L'alimentation se fait a travers une source de courant 14 et une diode D1 dont on verra comment elle peut empêcher un retour de courant vers la borne A.

La fonction d'ouverture de boucle calibrée proprement dite est connectée entre une borne E et la borne M, la borne A étant reliée à la borne E par la source de courant 14 et la diode D1.

Une diode zener Z1 de tension nominale faible (1 volt environ), mais suffisante pour le fonctionnement de comparateurs et portes logiques est prévue entre les bornes E et M.

Une résistance R en série avec une capacité C est reliée également entre les bornes E et M.

Un bouton poussoir 16 permet de court-circuiter et décharger instantanément la capacite C pour démarrer le processus d'ouverture de boucle calibrée.

Deux comparateurs, COMP1 et COMP2, qui sont des amplificateurs différentiels, reçoivent l'un sur son entrée négative et l'autre sur son entrée positive le potentiel de charge de la capacite C, c'est a dire qu'ils sont connectes au point de jonction de la résistance R et de la capacité C. L'autre entrée du premier comparateur COMP1 reçoit une tension de reference V1; l'autre entrée du deuxième comparateur reçoit une tension de référence V2 plus grande que V1.

Les sorties des comparateurs sont reliées directement aux entrées d'une porte logique 18 (ET par exemple) fournissant un signal de commande d'ouverture d'un interrupteur I seulement si le potentiel aux bornes de la capacite C est compris entre V1 et V2, et fournissant au contraire un signal de commande de fermeture de cet interrupteur lorsque ce potentiel est plus petit que V1 ou plus grand que V2.

Les comparateurs sont alimentés entre la masse M et la borne E, donc sous une tension d'environ 1 volt, limitée par la diode zener Z1.

L'interrupteur I est connecté entre la masse M et la base d'un transistor Q1, base qui est reliée par ailleurs à la borne G par l'intermédiaire d'une résistance R2. Le collecteur du transistor Q1 est relié à la base du transistor Q2 et son émetteur est relié à la borne E.

Le transistor Q1 fonctionne de la manière suivante:

- lorsqu'il est bloqué, du fait de la mise à la masse de sa base par l'interrupteur I fermé, il isole la borne E des résistances R1 et R2;

l'interface haute tension Q2, Q3, Q4, R1, C1 joue normalement son rôle et les fonctions principales du téléphone (bloc 10) sont normalement alimentées sous 5 volts entre les bornes A et M; les circuits de la fonction d'ouverture de boucle calibrée sont alimentés sous la faible tension de 1 volt établie par la diode zener, mais l'énergie d'alimentation est fournie par les bornes A et M sous 5 volts à travers la source de courant 14 et la diode D1 qui introduisent une chute de tension de 4 volts environ. Telle est la situation en dehors de l'ouverture de boucle;

- pendant l'ouverture de boucle, l'interrupteur I est ouvert; le transistor Q1 est polarisé par la résistance R2 de manière à être conducteur (et même saturé); ce transistor laisse alors passer un courant vers son émetteur, en provenance de la resistance R1, donc du redresseur et donc de la ligne, et ce courant alimente la fonction d'ouverture de boucle calibrée (diode zener Z1, comparateurs, circuit RC, porte ET 18); ce courant est cependant limité par R1 et R2 de telle manière que la somme des courants dirigés par l'émetteur du transistor Q1 vers la fonction d'ouverture de boucle n'excède pas quelques centaines de microampères;

- la mise en conduction du transistor Q1 (et surtout sa mise en saturation) font chuter le potentiel de la base du transistor Q2, de sorte que l'on n'obtient plus, sur la borne A, compte tenu de la chute de tension base-émetteur du transistor Q1, qu'une tension égale à Vz - 0,6 volts (Vz = tension de la diode zener Z1, d'environ 1 volt) soit environ 0,4 volt, suffisamment faible pour que les fonctions du téléphone (bloc 10) ne puissent plus consommer qu'un courant négligeable (environ 20 microampères).

Le rôle de la diode D1 est alors d'empêcher que la tension de 1 volt à la borne E ne soit retransmise vers la borne A à travers la source de courant 14.

L'ouverture de boucle calibrée fonctionne de la manière suivante: l'usager appuie sur le bouton poussoir 16, ce qui décharge la capacité C initialement chargée à une tension supérieure à V2, de sorte que l'interrupteur I, initialement fermé, reste encore fermé. La capacité C commence à se recharger avec une constante de temps RC dès que le bouton est relaché. La tension monte à ses bornes l'interrupteur I restant fermé tant que cette tension reste inférieure a V1.

L'interrupteur I ne s'ouvre que lorsque la tension atteint V1, ce qui évite les problèmes de rebond lors de la fermeture du bouton poussoir 16.

L'interrupteur reste ouvert tant que la tension aux bornes de la capacité croît entre V1 et V2 et, pendant ce temps, les fonctions du téléphone ne sont plus alimentées (fuites résiduelles environ 20 microampères) et le circuit assurant la fonction d'ouverture de boucle calibrée est raccordé à la ligne, pour prélever un courant d'une centaine de microampères, par l'intermédiaire du transistor Q1 et des résistances de limitation R1 et R2 (plusieurs centaines de kilohms au moins).

Lorsque la tension aux bornes de la capacité C atteint V2, l'interrupteur I se referme et la situation normale se rétablit avec une alimentation de 5 volts environ entre les bornes A et M pour les fonctions usuelles du téléphone et pour la fonction d'ouverture de boucle calibrée.

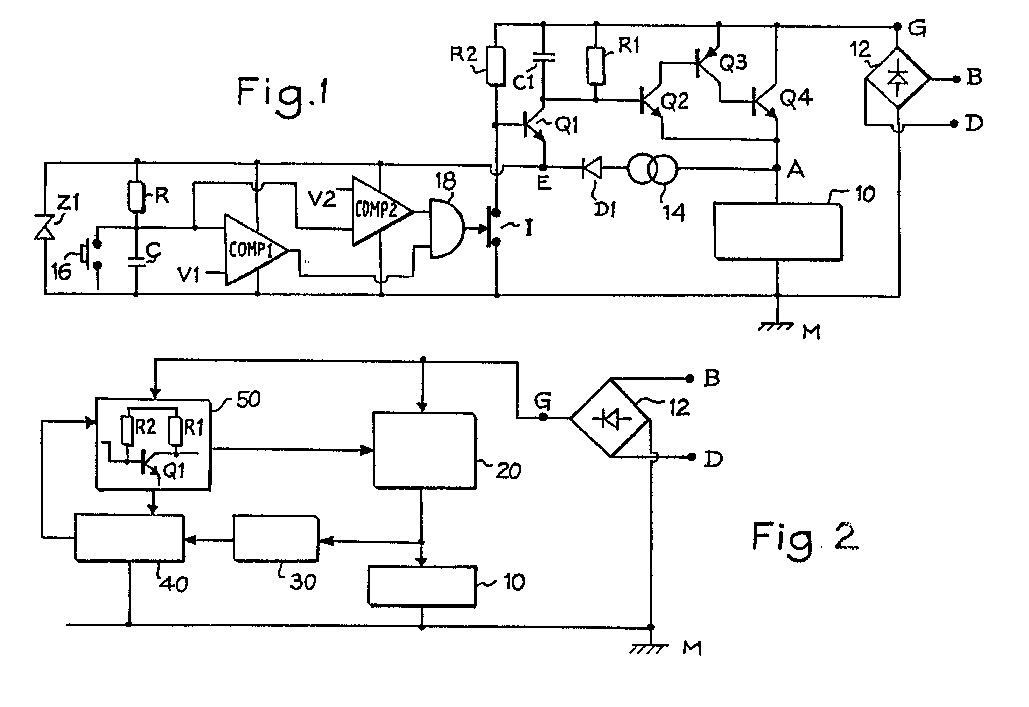

Pour mieux faire comprendre les fonctions des différents éléments de la figure 1, et notamment du transistor Q1 qui a une double fonction, on a représenté à la figure 2 le même schéma sous forme de blocs fonctionnels; la ligne téléphonique, après redressement dans le pont redresseur 12, fournit de l'énergie, entre les bornes G et M, à un circuit d'alimentation 20 qui est le circuit d'interface haute tension (Q2, Q3, Q4); ce circuit fournit en A une tension d'alimentation aux fonctions principales du téléphone (bloc 10) et aussi, par l'intermédiaire d'un bloc de limitation de courant 30, au bloc de commande d'ouverture de boucle (bloc 40 correspondant aux éléments Z1, 16, R, C, COMP1, COMP2, 18, I de la figure 1); ce bloc 40 est lui même alimenté à travers un bloc d'alimentation 50 mais en même temps il commande la mise en service de ce bloc d'alimentation 50 tout en commandant, d'ailleurs par l'intermédiaire de ce bloc 50, la mise hors service du bloc d'alimentation principale 20; le bloc 50 reçoit son énergie de la borne G; il comprend essentiellement le transistor Q1 et ses résistances de polarisation. C'est ainsi que le transistor Q1 a une fonction double:
- de transmission d'un courant d'alimentation vers le bloc 40 uniquement pendant l'ouverture de boucle;
- de transmission d'un ordre de commande d'interruption de l'alimentation principale 20.

## Revendications

1. Circuit téléphonique assurant une fonction d'ouverture de boucle calibrée permettant la détection par un central ou un standard téléphonique de l'interruption pendant une durée calibrée de la consommation de courant principale d'un poste téléphonique au bout d'une ligne téléphonique, caractérisé en ce que ce circuit est alimenté à partir de la ligne téléphonique en parallèle avec les circuits assurant les fonctions principales du téléphone et en ce que ce circuit comprend des moyens pour assurer l'interruption pratiquement complète de l'alimentation des circuits assurant les fonctions principales du téléphone tout en maintenant pour lui-même une alimentation limitée en courant nécessaire à son propre fonctionnement.

2. Circuit selon la revendication 1, caractérisé en ce qu'il comporte un moyen (Q1, R2, R1) pour empêcher, pendant l'ouverture de boucle, l'application d'une tension d'alimentation suffisante, en provenance de la ligne, aux différents circuits assurant les fonctions principales du téléphone, et pour mettre en service une alimentation parallèle à partir de la ligne téléphonique, pour son propre fonctionnement.

3. Circuit selon la revendication 2, caractérisé par le fait qu'il comprend un moyen de commande, pendant une durée calibrée, de la mise en conduction d'un transistor (Q1) qui possède les fonctions suivantes:
- abaissement de la tension d'alimentation des fonctions principales du téléphone jusqu'à une valeur où ces fonctions ne consomment pratiquement plus de courant,
- transmission d'un courant issu de la ligne téléphonique et nécessaire au fonctionnement du circuit d'ouverture de boucle calibrée.

4. Circuit selon la revendication 3, caractérisé par le fait qu'il est alimenté, en dehors de la durée d'ouverture de boucle calibrée, par la même tension d'alimentation que les fonctions principales du téléphone, à travers une source de courant (14) et une diode (D1), et qu'il est alimenté, pendant la durée d'ouverture de boucle calibrée, par le transistor (Q1) sans passer par la source de courant et la diode (D1).

## Patentansprüche

1. Fernsprech-Schaltkreis, der ein definiertes Öffnen der Schleife bewirkt, wodurch ein Amt oder eine Fernsprech-Vermittlungsstelle die Unterbrechung des Hauptstromverbrauchs eines Fernsprechgeräts während einer definierten Zeitdauer erfassen kann, dadurch gekennzeichnet, daß dieser Schaltkreis über die Fernsprechleitung parallel mit den die Hauptfunktionen des Endgeräts sicherstellenden Kreisen mit Strom versorgt wird und daß dieser Schaltkreis Mittel aufweist, um die praktisch vollständige Unterbrechung der Stromversorgung der die Hauptfunktionen des Endgeräts sicherstellenden Kreise zu bewirken und zugleich für ihn selbst eine begrenzte Stromversorgung aufrechtzuerhalten, soweit sie für seinen eigenen Betrieb nötig ist.

2. Schaltkreis nach Anspruch 1, dadurch gekennzeichnet, daß er ein Mittel (Q1, R2, R1) enthält, um während der Öffnung der Schleife das Anlegen einer ausreichenden Versorgungsspannung über die Leitung an die verschiedenen, die Hauptfunktionen des Telefons sicherstellenden Schaltkreise zu verhindern und um eine parallele Stromversorgung ausgehend von der Telefonleitung für seinen eigenen Betrieb in Dienst zu stellen.

3. Schaltkreis nach Anspruch 2, dadurch gekennzeichnet, daß er ein Mittel zur Steuerung eines Transistors (Q1) in den Leitzustand während einer festgelegten Dauer besitzt, wobei dieser Transistor folgende Funktionen erfüllt:
- Absenkung der Versorgungsspannung für die Hauptfunktionen des Telefons bis auf einen Wert, bei dem diese Funktionen praktisch keinen Strom mehr verbrauchen,
- Übertragung eines von der Telefonleitung kommenden und für den Betrieb des Fernsprechschaltkreises zum definierten Öffnen der Schleife notwendigen Stroms.

4. Schaltkreis nach Anspruch 3, dadurch gekennzeichnet, daß er außerhalb der Zeit, in der die Schleife definiert geöffnet ist, durch dieselbe Versorgungsspannung gespeist wird wie die Hauptfunktionen des Telefons, und zwar über eine Stromquelle (14) und eine Diode (D1), und daß er während der Zeiten, in denen die Schleife definiert geöffnet ist, durch den Transistor (Q1) an der Stromquelle und der Diode (D1) vorbei gespeist wird.

**Claims**

1. A telephone circuit for ensuring a defined loop breaking in order to allow a telephone central or a local exchange to detect the interruption of the main current consumption of a subscriber set at the end of a telephone line for a defined laps of time, characterized in that this circuit is supplied with current via the telephone line parallelly with the equipments ensuring the main subscriber set functions, and that this circuit includes means for ensuring the nearly complete interruption of the current supply of the equipments ensuring the main subscriber set functions while maintaining a restricted current supply in favour of said circuit, sufficient for its own operation.

2. A circuit according to claim 1, characterized in that it comprises a means (Q1, R2, R1) for preventing, during the breaking of the loop, the application of a suffcent supply voltage via the line to the different equipments ensuring the main subscriber set functions and for putting a parallel supply in service via the telephone line for its own operation.

3. A circuit according to claim 2, characterized in that it comprises a means for controlling during a defined laps of time, a transistor (Q1) into its conduction state, this transistor having the following functions:
- lowering of the supply voltage of the main subscriber set functions down to a value at which these functions practically do not consume any more current,
- transmission of a current from the telephone line, current which is necessary for the operation of the circuit for ensuring a defined breaking of the loop.

4. A circuit according to claim 3, characterized in that, except during the periods of defined loop breaking, the circuit is supplied by the same supply voltage as the main subscriber set functions through a current source (14) and a diode (D1), and that, during the period of defined loop breaking, it is supplied through the transistor (Q1) without passing over the current source and the diode (D1).

Fig.1

Fig. 2

132 173